# EUROPEAN PATENT SPECIFICATION

(11) **EP 2 877 727 B1**
(45) Date of publication and mention of the grant of the patent: **01.05.2019**
(21) Application number: 13823805.0
(22) Date of filing: 19.07.2013
(51) Int. Cl.: F16C 11/06, F01D 17/16, F04D 29/56

(54) **TOP HAT BEARING RETAINER FOR VARIABLE VANE ACTUATOR**
ZYLINDERLAGERKÄFIG FÜR AKTUATOR MIT VERSTELLBARER LEITSCHAUFEL
SUPPORT DE ROULEMENT ALLONGÉ POUR ACTIONNEUR D'AUBES À INCIDENCE VARIABLE

(30) Priority: 26.07.2012 US 201213558392
(43) Date of publication of application: 03.06.2015
(73) Proprietor: United Technologies Corporation, Farmington, CT 06032 (US)
(72) Inventor: LITTLE, Jonathan D., West Hartford, CT 06117 (US)
(74) Representative: Dehns
(86) International application number: PCT/US2013/051191
(87) International publication number: WO 2014/018383

(56) References cited:
- EP-A2- 1 398 464
- US-A- 4 174 137
- US-A- 4 275 560
- US-A- 4 720 237
- US-A- 4 720 237
- US-A1- 2004 022 624
- US-B2- 7 794 203

## Description

### BACKGROUND OF THE INVENTION

This application relates to a bearing retainer that prevents undesired rotation of the actuator for a variable vane system.

Gas turbine engines are known, and typically include a fan delivering air into a compressor section. The air is compressed in the compressor section, and delivered downstream into a combustion section where it is mixed with fuel and ignited. Products of this combustion pass downstream over turbine rotors, driving them to rotate.

The compressor section typically includes a plurality of compressor stages having rotors carrying a plurality of rotating blades. Intermediate the compressor stages are static vanes, which serve to redirect the airflow between the compressor stages.

A desired approach angle for the air may vary during operation of the gas turbine engine, and dependent upon operational conditions. Thus, it is known to provide so-called variable vanes which are pivotably mounted such that their angle can be changed. Typically, a single actuator drives a ring to rotate, and this rotation causes the orientation of a plurality of vanes to be changed.

One known actuator includes a piston rod of a cylinder to cause the rotation of a bell crank. The cylinder is mounted at a rear end on a spherical bearing, and the piston is also mounted on a spherical bearing within a clevis.

The use of the spherical bearings allows some misalignment such as may be due to manufacturing tolerances or thermal displacement.

However, when stresses and force are placed on the actuator, and in particular the piston rod, the cylinder may rotate about its own axis. When this occurs, the cylinder or its mount structure may strike a mount structure associated with a housing. This is undesirable.

A variable vane actuator having the features of the preamble of claim 1 is disclosed in US 4720237 A. EP 1398464 A2 discloses a gas turbine bypass valve actuator.

### SUMMARY OF THE INVENTION

According to the invention there is provided a variable vane actuator as set forth in claim 1.

The bearing retainer may have a shape of a top hat, with an extension extending from a planer section. The planer section abuts the spherical bearing. The extension fits within an opening in one of the ledges. The bolt extends through the extension, through the planer portion, through the inner member, and then through a second of the ledges.

The bearing retainer may be generally cylindrical.

The bearing retainer may have a truncated portion associated with a limited circumferential extent of the bearing retainer. The truncated portion is positioned adjacent an under surface of the cylinder from which the tailstock extends.

The bearing retainer may be formed of one of a composite or metal.

A first gap may be defined between the bearing retainer and tailstock, and a second gap be defined between a second of the ledges and tailstock. The first gap is smaller than the second gap.

One of the ledges may receive a head of the bolt.

The invention also extends to a compressor section as set forth in claim 8 and a gas turbine engine as set forth in claim 9.

These and other features of this application will be best understood from the following specification and drawings, the following of which is a brief description.

### BRIEF DESCRIPTION OF THE DRAWINGS

Figure 1A schematically shows a gas turbine engine.
Figure 1B shows an alternative engine.
Figure 2 shows an actuator structure for use in the Figure 1 engine.
Figure 3 is a cross-sectional view through a mount incorporated into the present invention.
Figure 4 shows a detail of a top hat bearing retainer.
Figure 5 is a perspective view of the bearing retainer.
Figure 6 is a section along axis 6-6 of Figure 3 showing rotation.
Figure 7 shows rotation in a second embodiment.

### DETAILED DESCRIPTION

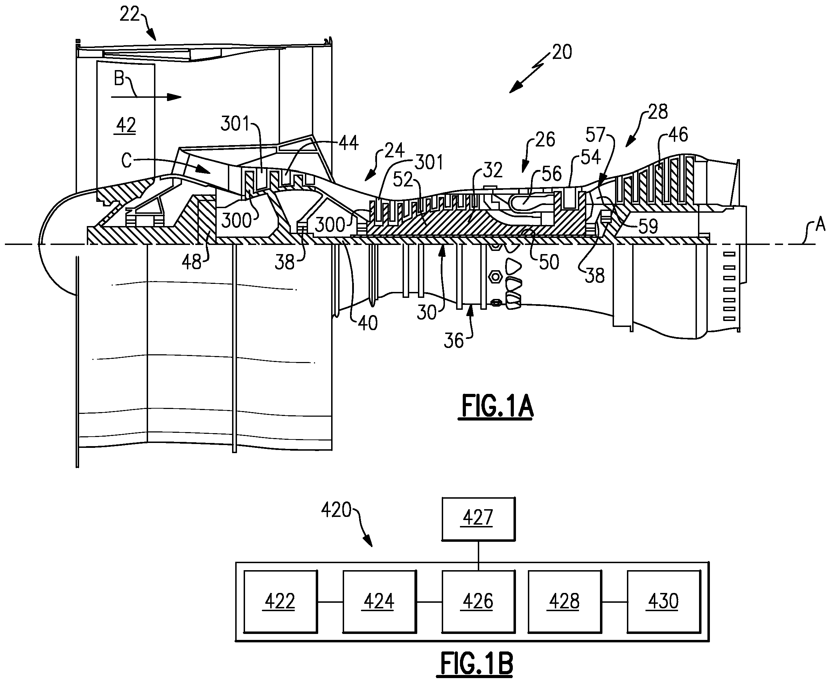

Figure 1A schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath B while the compressor section 24 drives air along a core flowpath C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures. Also, industrial gas turbines will come within the scope of this application.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion.

As is clear, Figure 1A is a highly schematic view. Among the components of the compressor section 24, are a plurality of compressor stages 300 in both the high pressure and low pressure compressors. The compressor stages 300 are each defined by a plurality of rotating blades. Intermediate the stages are a plurality of static vanes 301. The static vanes may be fixed, or may be variable vanes. The variable vanes have an airfoil that may be rotated to adjust an approach angle of the air from one compressor stage approaching the next downstream compressor stage.

Figure 1B shows an alternative engine 420 that would also have a compressor with variable vanes. Engine 420 is shown to schematically include a compressor section 422 delivering compressed air into a combustor section 424. A turbine section 426 is downstream of the combustor section 424, and serves to drive the compressor 422. In addition, a generator 427 is shown schematically for generating electricity.

Additional turbine stages 428 may be driven by products of the combustion to in turn drive a generator 430. Engine 420 is an industrial gas turbine, such as may be utilized in land-based applications to generate electricity. The features of this application would apply to this type engine as well.

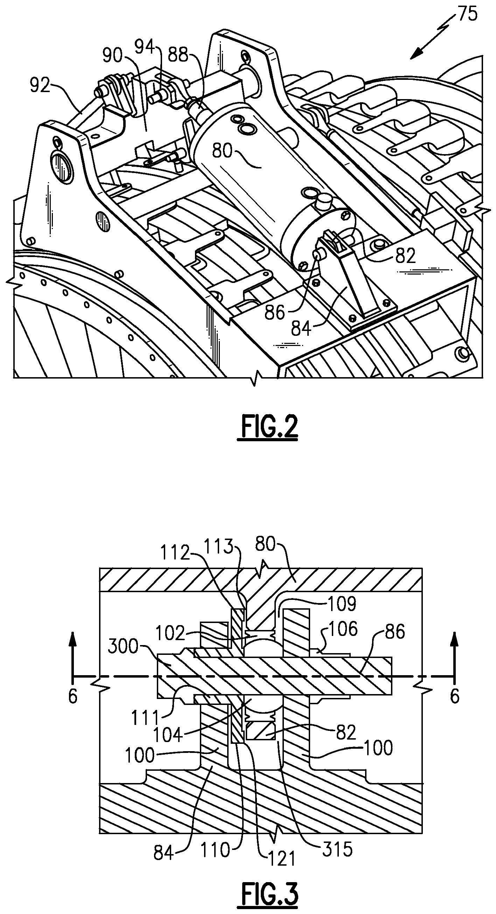

Figure 2 shows an actuator drive 75 which includes a cylinder 80 that drives a piston rod 88 outwardly or inwardly. The cylinder driver may be fluid, or may be electrical, mechanical, etc. The piston is pivotally connected at 94 to a clevis 90. Clevis 90 drives a sync ring rod 92. As is known, the rod 92 causes a ring to rotate, and this then adjusts the angle of a plurality of vanes, such as the vanes 301 shown in Figure 1. The actuation of the vanes, and the reason for changing the approach angle of the vanes are as known in the art.

This application relates to improvements in a tailstock mount, which mounts a tailstock 82 associated with the cylinder 80 in a clevis 84 on a static housing. As shown, a bolt 86 mounts the tailstock 82 in the clevis 84.

Figure 3 is a cross-sectional view through this connection, and shows a nut 106 locking the bolt 86 in the clevis, and locking the tailstock 82 of the cylinder 80. As shown, the clevis 84 includes two side ledges 100, and the bolt 86 extends through openings in those two ledges 100. The tailstock 82 is mounted on the bolt 86 through a spherical bearing 102/104. The spherical bearing includes an inner spherical portion 104 which is fixed with the bolt 86, and an outer portion 102 which is fixed to the tailstock 82. As shown, a bearing retainer 110 forces the bearing against an opposed ledge 100. The bearing retainer 110 has the shape of a top hat, and includes an extending portion 111 received within an opening in one ledge 100, and a planer portion 112 which abuts the bearing. An edge 121 of the bearing retainer 110 faces the tailstock. The bolt 86 clamps the bearing retainer 110 and bearing inner spherical portion 104 against one side ledge.

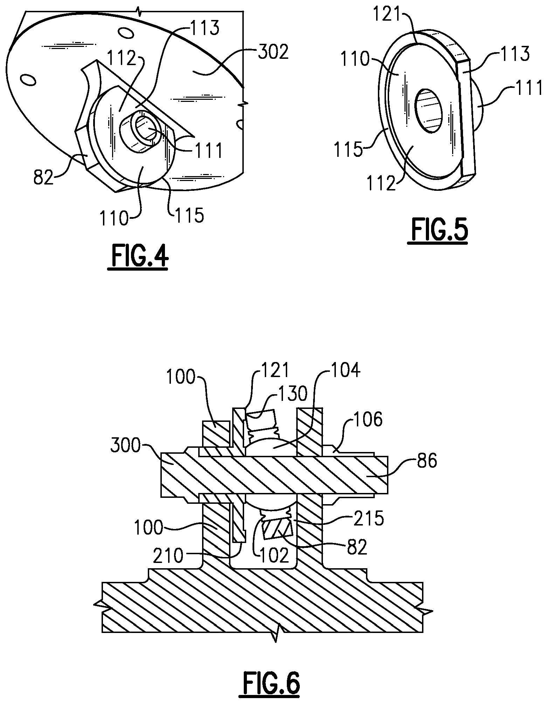

As shown in Figure 4, the retainer 110 has a flat edge 113 which is truncated compared to an otherwise cylindrical shape 115. The truncated portion 113 provides clearance adjacent to a lower surface 302 of the cylinder 80.

Figure 5 shows details of the retainer 110.

As shown in Figure 6, the tailstock 82, and the outer bearing portion 102 have rotated on the inner spherical bearing portion 104. In the past, this could allow the tailstock 82 to contact one of the ledges 100, which could cause damage to the ledge or the tailstock. However, as shown at 130, with this rotation, the tailstock is abutting a portion of the retainer 110 as shown at 130. This prevents further rotation.

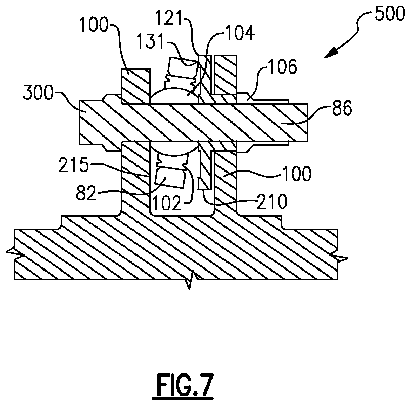

The Figure 7 discloses a distinct assembly 500 wherein the bearing retainer 210 is positioned adjacent the opposed ledge from the ledge that receives a head 300 of bolt 86. Again, with rotation, there is contact between retainer 210 and the tailstock as shown at 131. It should be understood the bearing retainer could be at either side.

Returning to Figure 3, a first gap 123 between the edge 121 of the bearing retainer 110 and the tailstock 82 is less than a second gap 109 between the tailstock 82 and the opposed ledge 100. This results in the gap 315 also being greater than the gap 123. Thus, when misalignment, as illustrated in Figure 6, occurs, the contact will occur between edge 121 and tailstock 82, rather than at the opposed side 215. The same gaps are found in the Figure 7 assembly.

The retainer 110 is formed of a composite or metal such as aluminium or steel. Generally, the retainer 110 should be formed of a softer material than the material used for the actuator tailstock, or the bearing outer surface 102. Thus should there be damage due to the rotation, it will be the less expensive retainer 110 which is damaged.

## Claims

1. A variable vane actuator comprising:
a plurality of vanes (301) which may be rotated to change an approach angle of associated airfoils; and
a cylinder (80) mounted to drive a piston rod (88) to in turn cause a linkage system or actuator to vary the approach angle of said airfoils, said cylinder (80) having a tailstock (82) at an end remote from the piston rod (88), with said tailstock (82) being pivotably mounted within a clevis (84), and on a bolt (86); **characterised by** further comprising:
a spherical bearing (102/104) between said bolt (86) and said tailstock (82), with said spherical bearing including an inner portion (104) riding on said bolt (86) and having a spherical outer surface, and an outer portion (102) which moves with said tailstock (82), and has an spherical inner surface moveable on said spherical outer surface of said inner portion (104);
said clevis (84) including two spaced ledges (100); and
a bearing retainer (110) between one of said ledges (100) and said spherical bearing (102/104), said bearing retainer (110) being formed of a material that is softer than a material forming said tailstock (82) such that said bearing retainer (110) provides a stop to prevent undue rotation of said tailstock (82) and said outer portion (104) relative to said inner portion (102).

2. The variable vane actuator as set forth in claim 1, wherein said bearing retainer (110) has a shape of a top hat, with an extension (111) extending from a planar section (112), said planar section (112) abutting said spherical bearing (102/104), and said extension (111) fitting within an opening in said one of said ledges (100), with said bolt (86) extending through said extension (111), through said planar portion (112), through said inner portion (104), and then through a second of said ledges (100).

3. The variable vane actuator as set forth in claim 1 or 2, wherein said bearing retainer (110) is generally cylindrical.

4. The variable vane actuator as set forth in claim 3, wherein said bearing retainer (110) has a flat edge (113), which is truncated compared to an otherwise cylindrical shape (115), associated with a limited circumferential extent of said bearing retainer (110), with said flat edge (113) being positioned adjacent an under surface of said cylinder (80) from which said tailstock (82) extends.

5. The variable vane actuator as set forth in any preceding claim, wherein said bearing retainer (110) is formed of one of a composite or metal.

6. The variable vane actuator as set forth in any preceding claim, wherein a first gap (123) is defined between said bearing retainer (110) and said tailstock (82), and a second gap (109) is defined between a second of said ledges (100) and said tailstock (82), and said first gap (123) being smaller than said second gap (109).

7. The variable vane actuator as set forth in any preceding claim, wherein said one of said ledges (100) receives a head of said bolt (86).

8. A compressor section (24) comprising:
a plurality of compressor stages (300) spaced for rotation about a central axis; and
a plurality of vanes (301) positioned between adjacent ones of said plurality of compressor stages (300), with said plurality of vanes (301) being provided with an airfoil for directing air to a downstream compressor stage (300); **characterised by** comprising:
an actuator as set forth in any preceding claim;
an approach angle of said plurality of airfoils being changeable by said actuator, and said bearing retainer (110) between one of said ledges (100) and said spherical bearing (102/104) and said tailstock (82).

9. A gas turbine engine (20) comprising:
a compressor section (24), a combustor (26), and a turbine section (28); **characterised in that** said compressor section (24) is a compressor section as set forth in claim 8.

## Patentansprüche

1. Aktuator mit verstellbarer Leitschaufel, der Folgendes umfasst:
eine Vielzahl von Leitschaufeln (301), die gedreht werden können, um einen Annäherungswinkel von damit assoziierten Schaufelblättern zu verändern; und
einen Zylinder (80), der dazu befestigt ist, eine Kolbenstange (88) anzutreiben, um wiederum ein Gestängesystem oder einen Aktuator dazu zu veranlassen, einen Annäherungswinkel der Schaufelblätter zu variieren, wobei der Zylinder (80) ein Endstück (82) an einem Ende aufweist, das von der Kolbenstange (88) entfernt ist, wobei das Endstück (82) schwenkbar innerhalb einer Gabel (84) und auf einem Bolzen (86) befestigt ist; **dadurch gekennzeichnet, dass** er ferner Folgendes umfasst:
ein kugelförmiges Lager (102/104) zwischen dem Bolzen (86) und dem Endstück (82), wobei das kugelförmige Lager einen Innenabschnitt (104), der auf dem Bolzen (86) ruht und eine kugelförmige Außenfläche aufweist, und einen Außenabschnitt (102) einschließt, der sich mit dem Endstück (82) bewegt und eine kugelförmige Innenfläche aufweist, die auf der kugelförmigen Außenfläche des Innenabschnitts (104) beweglich ist;
wobei die Gabel (84) zwei voneinander beabstandete Leisten (100) einschließt; und
einen Lagerkäfig (110) zwischen einer der Leisten (100) und dem kugelförmigen Lager (102/104), wobei der Lagerkäfig (110) aus einem Material ausgebildet ist, das weicher ist als ein Material, das das Endstück (82) bildet, sodass der Lagerkäfig (110) einen Anschlag bereitstellt, um eine übermäßige Drehung des Endstücks (82) und des Außenabschnitts (104) relativ zu dem Innenabschnitt (102) zu verhindern.

2. Aktuator mit verstellbarer Leitschaufel nach Anspruch 1, wobei der Lagerkäfig (110) eine Form eines Zylinderhuts aufweist, wobei sich eine Verlängerung (111) von einem ebenen Abschnitt (112) erstreckt, wobei der ebene Abschnitt (112) an das kugelförmige Lager (102/104) anstößt, und wobei die Verlängerung (111) in eine Öffnung in der einen der Leisten (100) passt, wobei der Bolzen (86) sich durch die Verlängerung (111), durch den ebenen Abschnitt (112), durch das Innenabschnitt (104) und danach durch eine zweite der Leisten (100) erstreckt.

3. Aktuator mit verstellbarer Leitschaufel nach Anspruch 1 oder 2, wobei der Lagerkäfig (110) im Allgemeinen zylindrisch ist.

4. Aktuator mit verstellbarer Leitschaufel nach Anspruch 3, wobei der Lagerkäfig (110) eine flache Kante (113) aufweist, die im Vergleich zu einer ansonsten zylindrischen Form (115) gekürzt ist und mit einer begrenzten Erstreckung des Lagerkäfigs (110) in Umfangsrichtung assoziiert ist, wobei die flache Kante (113) benachbart zu einer Unterfläche des Zylinders (80), von der sich das Endstück (82) erstreckt, positioniert ist.

5. Aktuator mit verstellbarer Leitschaufel nach einem der vorhergehenden Ansprüche, wobei der Lagerkäfig (110) aus einem von einem Verbundmaterial oder einem Metall ausgebildet ist.

6. Aktuator mit verstellbarer Leitschaufel nach einem der vorhergehenden Ansprüche, wobei ein erster Spalt (123) zwischen dem Lagerkäfig (110) und dem Endstück (82) definiert ist und ein zweiter Spalt (109) zwischen einer zweiten der Leisten (100) und dem Endstück (82) definiert ist, wobei der erste Spalt (123) kleiner ist als der zweite Spalt (109).

7. Aktuator mit verstellbarer Leitschaufel nach einem der vorhergehenden Ansprüche, wobei die eine der Leisten (100) einen Kopf des Bolzens (86) aufnimmt.

8. Verdichterbereich (24), der Folgendes umfasst:
eine Vielzahl von Verdichterstufen (300), die zur Drehung um eine Mittelachse beabstandet sind; und
eine Vielzahl von Leitschaufeln (301), die zwischen benachbarten der Vielzahl von Verdicherstufen (300) positioniert sind, wobei die Vielzahl von Leitschaufeln (301) mit einem Schaufelblatt zum Leiten von Luft an eine nachgeschaltete Verdichterstufe (300) bereitgestellt sind;
**dadurch gekennzeichnet, dass** er ferner Folgendes umfasst:
einen Aktuator nach einem der vorhergehenden Ansprüche;
wobei ein Annäherungswinkel der Vielzahl von Schaufelblättern durch den Aktuator veränderbar ist, und
den Lagerkäfig (110) zwischen einer der Leisten (100) und dem kugelförmigen Lager (102/104) und dem Endstück (82).

9. Gasturbinentriebwerk (20), das Folgendes umfasst:
einen Verdichterbereich (24), einen Brenner (26) und einen Turbinenbereich (28); **dadurch gekennzeichnet, dass** der Verdichterbereich (24) ein Verdichterbereich nach Anspruch 8 ist.

## Revendications

1. Actionneur d'aubes à incidence variable comprenant :
une pluralité d'aubes (301) qui peuvent être mises en rotation pour modifier un angle d'approche de profils aérodynamiques associés ; et
un vérin (80) monté pour entraîner une tige de piston (88) pour à son tour amener un système articulé ou un actionneur à faire varier l'angle d'approche desdits profils aérodynamiques, ledit vérin (80) ayant une contrepointe (82) au niveau d'une extrémité éloignée de la tige de piston (88), avec ladite contrepointe (82) étant montée de manière pivotante à l'intérieur d'un oeillet de suspension (84), et sur un boulon (86) ; **caractérisé en ce qu'**il comprend en outre :
un roulement sphérique (102/104) entre ledit boulon (86) et ladite contrepointe (82), avec ledit roulement sphérique incluant une portion interne (104) montée sur ledit boulon (86) et ayant une surface externe sphérique, et une portion externe (102) qui se déplace avec ladite contrepointe (82), et a une surface interne sphérique mobile sur ladite surface externe sphérique de ladite portion interne (104) ;
ledit oeillet de suspension (84) incluant deux rebords espacés (100) ; et
un élément de retenue de roulement (110) entre l'un desdits rebords (100) et ledit roulement sphérique (102/104), ledit dispositif de retenue de roulement (110) étant composé d'un matériau qui est plus souple qu'un matériau composant ladite contrepointe (82) de sorte que ledit dispositif de retenue de roulement (110) fournisse une butée pour empêcher une rotation excessive de ladite courtepointe (82) et de ladite portion externe (104) par rapport à ladite portion interne (102).

2. Actionneur d'aubes à incidence variable selon la revendication 1, dans lequel ledit dispositif de retenue de roulement (110) a une forme de haut-de-forme, avec une extension (111) s'étendant depuis une section plane (112), ladite section plane (112) venant en butée contre ledit roulement sphérique (102/104), et ladite extension (111) s'adaptant à l'intérieur d'une ouverture dans ledit desdits rebords (100), avec ledit boulon (86) s'étendant à travers ladite extension (111), à travers ladite portion plane (112), à travers ledit portion interne (104), puis à travers un second desdits rebords (100).

3. Actionneur d'aubes à incidence variable selon la revendication 1 ou 2, dans lequel ledit dispositif de retenue de roulement (110) est généralement cylindrique.

4. Actionneur d'aubes à incidence variable selon la revendication 3, dans lequel ledit dispositif de retenue de roulement (110) a un bord plat (113), qui est tronqué par rapport à une forme autrement cylindrique (115), associé à une circonférence limitée dudit dispositif de retenue de roulement (110), avec ledit bord plat (113) étant positionné de manière adjacente à une surface inférieure dudit vérin (80) depuis laquelle ladite contrepointe (82) s'étend.

5. Actionneur d'aubes à incidence variable selon l'une quelconque des revendications précédentes, dans lequel ledit dispositif de retenue de roulement (110) est composé de l'un d'un composite ou d'un métal.

6. Actionneur d'aubes à incidence variable selon l'une quelconque des revendications précédentes, dans lequel un premier espace (123) est défini entre ledit dispositif de retenue de roulement (110) et ladite contrepointe (82), et un second espace (109) est défini entre un second desdits rebords (100) et ladite contrepointe (82), et ledit premier espace (123) étant inférieur audit second espace (109).

7. Actionneur d'aubes à incidence variable selon l'une quelconque des revendications précédentes, dans lequel ledit desdits rebords (100) reçoit une tête dudit boulon (86).

8. Section de compresseur (24) comprenant :
une pluralité d'étages de compresseur (300) espacés pour une rotation autour d'un axe central ; et
une pluralité d'aubes (301) positionnées entre des adjacents de ladite pluralité d'étages de compresseur (300), avec ladite pluralité d'aubes (301) étant dotées d'un profil aérodynamique pour diriger l'air vers un étage de compresseur aval (300) ; **caractérisée en ce qu'**elle comprend :
un actionneur selon l'une quelconque des revendications précédentes ;
un angle d'approche de ladite pluralité de profils aérodynamiques pouvant être modifié par ledit actionneur, et ledit dispositif de retenue de roulement (110) entre l'un desdits rebords (100) et ledit roulement sphérique (102/104) et ladite contrepointe (82).

9. Moteur à turbine à gaz (20) comprenant :
une section de compresseur (24), une chambre de combustion (26), et une section de turbine (28) ; **caractérisé en ce que** ladite section de compresseur (24) est une section de compresseur selon la revendication 8.
